# EUROPEAN PATENT APPLICATION

(11) **EP 2 535 186 A1**
(43) Date of publication of application: **19.12.2012**
(21) Application number: 10845433.1
(22) Date of filing: 12.02.2010
(51) Int. Cl.: B32B 29/08, B32B 1/02, B32B 37/00, B32B 37/12

(54) **PACKAGING MATERIAL, MANUFACTURING METHOD AND PACKAGING TOOL MADE THEREOF**

(71) Applicant: Yan, Andrew Tak Kin, Hong Kong (CN)
(72) Inventor: Yan, Andrew Tak Kin, Hong Kong (CN)
(74) Representative: Hryszkiewicz, Danuta
(86) International application number: PCT/CN2010/000197
(87) International publication number: WO 2011/097759

(57) **Abstract**

A packaging material, a manufacturing method and a packaging tool thereof are provided. Said packaging material comprises an inner structural material (1) and an outer layer material (2), wherein said inner structural material (1) is a hollow material, and said outer layer material (2) is adhered to the outside surface of said inner structural material (1). The inner structural material (1) comprises a middle layer material (22), and, provided on two sides thereof, a surface layer material (21) and an inner layer material (23). Said packaging tool, made from said packaging material, comprises an inner structure (1) formed by folding the inner structural material (1) and an outer layer provided on the outside surface of said inner structure. In this invention, environmentally friendly and renewable hollow materials are used to produce inner structure by folding, and by incorporating an outer layer to produce a packaging tool which is suitable for containing goods.

## Description

The invention relates to the packaging material field, and more particularly to a packaging material, method for producing the same, and packaging device comprising the same.

The traditional gift box packaging uses paper materials and printed paper as the outer surface layer, when necessary a simple surface treatment such as lamination or varnishing will be applied. The inner structure uses expensive and heavy solid board, following the entire outer surface layer will apply complete coverage of adhesive to the outer face of the inner structure, therefore, it needs a lot of glue, which has increased the production cost and chemical usages, and it is not an environmental friendly product. Overall, this is a complex, expensive manufacturing solutions. In production, the usages of the chemical shall lead to sewage problem; and the heavy solid material shall increase the transport weight and generates carbon emission issue.

Another traditional packaging method is the use of cardboard material, by folding up the cardboard material to form the gift box, but it does not have an inner structure for the reinforcement purpose. It is only suitable for storing small items or light weight products. If the surface area and the span of the box is too large, containing a heavy object may lead to structural damage of the gift box, serious situation will lead to the rupture problem.

In view of the above-described problems, it is one objective of the invention to provide a packaging material, which uses the ordinary market available material which is renewable and recycled raw materials to replace the non-renewable materials with low-cost manufacturing solutions. Thus, the chemical usages and wastage during production are reduced; about the product designs, the usages of the traditional and expensive complex structure material is decreased, and environmental friendly material is employed, thereby reducing the product's weight, and achieving the lower carbon emission towards "environmental green" policy.

It is another objective of the invention to provide a method for producing a packaging material for the production of green packaging materials, and it can be effectively to simplify the production process.

It is still another objective of the invention to provide a packaging device, which is made by the above mentioned packaging material, it is simple in production, low cost, easy to transport, and in-lined with the "environmental green" policy.

To achieve the above objective, in accordance with one embodiment of the invention, there is provided a packaging material, comprising: an inner structural material and an outer surface material, wherein the inner structural material is a hollow material, and the outer surface material is attached onto an outer surface of the inner structural material.

Preferably, the outer surface material is card board or non-printing decorated material; the inner structural material comprises: a middle structural material, an outer face material and an inner face material which are arranged onto both sides of the middle structural material; and the middle structural material comprises a cavity or channel, and is glued with the outer face and inner face material.

Preferably, a hollow space is formed between the inner structural material and the outer surface material.

Preferably, the packaging material comprises multi layers of stacked inner structural material, and the hollow material of the inner structural material is designed in accordance with mechanical engineering.

Furthermore, the invention also provides a method for producing a packaging material, comprising the following steps:
a) producing a middle structural material comprises a cavity or channel, and sandwiching the middle structural material with an outer face material and an inner face material to yield a semi hollow material; and
b) attaching the outer surface material onto an outer surface of the hollow material.

Preferably, the middle structural material comprises the cavity or channel is prepared as follows: cutting a kraft paper or load bearing material into strips having a preset length in a rolling mode, applying glue to the strips at a fixed length at a given spacing position, stacking and sticking the strips to form the middle structural material having a strip shape; stretching the middle structural material to form a plurality of three dimensional hollow structures, applying glue on both sides of the middle structural material, and sandwiching the middle structural material with the outer face material and the inner face material.

Preferably, the middle structural material comprises the cavity or channel is prepared as follows: pressing a kraft paper or load bearing material into long pit having wave channels in a rolling mode using two rollers; applying glue on vertex points at upper and lower ends of the long pit having wave channels; and sandwiching the middle structural material with the outer face material and the inner face material.

In addition, this invention also provides a packaging device, which is prepared by the packaging material, and comprises an inner structure formed by folding up the inner structural material, and an outer surface layer formed at the outer surface of the inner structure.

Preferably, the packaging device is packaging boxes, booklet slip case, box with window, binder envelope, hardcover book case, photo frame, thermal insulation boxes, ice cream cone, or thermal insulation cup sleeve.

Preferably, a glue construction is arranged on a contact area between the inner structure and the outer surface layer; the inner structural material comprises: a middle structural material, an outer face material and an inner face material which are arranged onto both sides of the middle structural material; the outer surface layer of the packaging device comprises a processing layer having a hollow material for increasing loading capability; a gap is formed between the inner structural layer and the outer surface layer; and the gap is installed with mechanical parts, electronic parts, or insulation material.

Preferably, the inner structure and the outer surface layer are cylindrical or cone in shape, and sleeved with each other to form an integrated structure.

Advantages of the invention are summarized below:
1. The inner structural material of this invention makes the use of the environmental friendly hollow material, to play its environmental regeneration advantages, as well as inexpensive, low manufacturing cost and high efficiency features to replace the traditional heavy and expensive solid board material.
2. The packaging material of this invention has a unique design, the inner structure is produced by a simple folding method with hollow structure material, the "outer surface" has used various materials, and placing onto the outer surface inner structure to form the packaging device. It is not necessary to apply the glue on entire surface, reduces on the labor, save on production costs, reduce the usages of glue chemicals and materials. The light weight environmental hollow material of the inner structure can reduce the transportation loading then reduction on carbon emission.
3. The hollow gap structure between the "outer surface" layer and inner structure is also the special characteristics of this invention, the gap in between can be used to set up additional equipment which can make the packaging device become more diversity.

The invention is described hereinbelow with reference to accompanying drawings, in which:

FIG. 1 is a sectional view of a packaging device of a first example of the invention;

FIG. 2 is a sectional view of a packaging device of a second example of the invention;

FIG. 3 is a sectional view of a packaging device of a third example of the invention;

FIG. 4 is a sectional view of a packaging device of a fourth example of the invention;

FIG. 5 is a sectional view of a packaging device of a fifth example of the invention;

FIG. 6 is a sectional view of a packaging device of a sixth example of the invention;

FIG. 7 is a sectional view of a packaging device of a seventh example of the invention; and

FIG. 8 is a sectional view of a packaging device of an eighth example of the invention.

In the drawings, the following reference numbers are used: 1. hollow material as inner structure; 2. outer surface layer material; 3. processing layer; 4. adhesive structure; 5. hollow material; 6. book; 7. album or food; 8. handle; 9. additional part;10. machinery parts; 11. rivet; 12. ice pack; 21. outer face; 22. middle structural layer; 23. inner face; 24. hollow structure.

This invention provides a packaging material, comprising an inner structural layer, as well as an outer surface layer, which, as the inner structure can use the renewable and environmental friendly hollow material, and fold up to form an inner structure, then use the high-quality card board, decorative non-printing material for the outer surface layer by wrapped, tied, or twisted onto the outside surface of the inner structural layer, finally to form the packaging product.

Specifically, the inner structure comprises: middle structural material, the outer face and inner face material attached onto both sides of middle structural material. The middle structural material contains cavity or channel middle structural material, such surface will apply glue to adhere the outer face and inner face material.

To manufacturing the middle structural material for producing the inner structure:

The key factor of this invention is to use middle structural material as the basis of the packing material to form the inner structure. The construction of the inner structure has combined the outer face and inner face material with the middle structural material. Refer to the Mechanics principles in physics, a number of lightweight materials composed in vertical form will give a three-dimensional hollow structure or wavy long pit to form a multifunctional middle structural material which can stand for certain loading, by applying the glue onto the surface of the middle structure, and combine it with the outer face and inner face material to form a lightweight, high strength, less material, stiff inner structure semi-finished products for further processing in future.

The structure of the middle structural material and its production methods as of following:

1) Cavity Style: To use the kraft paper or load bearing material, by cutting the material from roll form into pre-set strip, then applies a fixed length of glue at a given spacing position, in return a fixed spacing shall not be glued , for example: applies 3 cm or 4 cm of glue on each segment and sticks together to form the middle structural layer with continuous strip, then stretch to form various three dimension hollow structure by a special equipment, following by applying glue onto both sides of middle structural layer, and then using the outer face and inner face to clamp the structure to form the middle structural material as semi finished product for further processing in the future.

2) Channel Style: To use the kraft paper or load bearing material, the method is to compress the roll form material into long wave channel from two rollers (similar to the upper gear and lower gear rollers). it will compress the flat raw material into long wave channels, then apply the glue onto both sides of the long wave channel vertex point, and then using the outer face and inner face to clamp the structure to form the middle structural material as semi finished product for further processing in the future..

It may stack up many layers of middle structural material and the inner face to enhance the load bearing capability and protective effect. In addition, the hollow material can be replaced by foam material to act as the combination of the middle structure, the outer face and the inner face, the foam material can play the thermal insulation and lightness effects.

The space structure has been formed in between the inner structure and outer surface layer, it can be used to install additional equipment, its formation as below.

The Space Structure: Based on the product shape and size to design the inner structure and outer surface layer components, using the die cut process to produce the semi-finished product. Following the outer surface layer can be wrapped, tied, twisted onto the inner structure rather than fixing it by applying layer of glue on the entire surface, and there shall be spacing available in between the outer surface layer and inner structure. This space structure is also one of the characteristics of this invention, the use of this space characteristic can install additional required equipment" can also play an insulation function, and make it become more diversity.

Die Cut Process: It is a common process on packaging production. According to the required product to design the shape and size of inner structure and outer surface layer, process the die cut to form the semi-finished product, and coupled with the assembly process to complete the finished goods. Die cut mold is the equipment of die cut process, it is based on the die cut shape of the product to draw the die cut position on the board, and cut it with a saw for installing the score line and die cut mold to form the die cut template. Based on the required production to select the appropriate die cut machines, size and speed, installing the die cut mold onto the machine for the production. In the production process, by pressing the die with desired pressure to score and cut the material into a shape. For the scoring process, by pressing the scoring line onto the material to form an indented line for folding process; For the cutting process, by pressing the cutting knife onto the material to the desired shape. In practice, the die cut process is the combination of joining the cutting and scoring knives to form a die for doing the die cut and scoring simultaneously on the die cutting machine, it is called die cutting.

It is worth mentioning that the packaging material of this invention has the green environmental effect on covering material, design, application method and etc:

1. The inner structure material of this invention makes use of the environmental friendly hollow material which is produced to play its environmental, regeneration advantages, as well as inexpensive, low manufacturing cost and high efficiency features to replace the traditional heavy and expensive solid board.

1) The specific issue of this invention is using 100% renewable hollow material to act as the inner structure, it can be recyclable, in line with the concept of "green" measure, it is used to replace the heavy and expensive solid board to reduce the material cost.

2) This specific issue of this invention is the hollow material which is the mechanical structural design with carrying capacity, if it has to strengthen the bending and burst rate to meet the transport requirements, it can stack up with multi layers of hollow material to strengthen the results, it gives a lighter, stronger and cheaper result than the existing thick board.

3) The specific issue of this invention is the use of lightweight hollow material which gives 20 - 30% lighter result than the existing solid wood, and it can reach the stiff mechanical properties, greatly reduce the transportation load, and effectively reduce the "carbon" emissions issue.

2.The packaging material of this invention has an unique design, the inner structure is produced by a simple folding method with hollow material, outer surface layer use diversified materials, and placing over the inner structure to form the packaging device, not necessary to apply the glue on the entire surface, reduce the labor cost, cost saving in production, reduce the use of glue chemicals and materials, the light weight environmental hollow material of the inner structure can reduce the corresponding freight loading and achieve the effect of reducing the carbon emission.

1) The specific issue of this invention is the use of simple fold up method to form the inner structure, then placing over the top of inner structure as the outer surface layer, the difference in between the present method is to glue the thin paper onto the heavy and expensive solid board, which is a complicated and inefficient production method. Comparatively, this invention does not need to apply glue on the entire outer surface layer and inner structure, simply put a small amount of glue on the fold line area of outer surface layer and inner structure to reinforce its structure. For example: the corner, folding edge, inner paper layer and special additional design for decorative purposes on finished goods, according to the design to calculate the amount of glue required. Thus, it has the ability to save production cost and reduce the use of chemical such as glue, effectively reduce the liquid waste.

2) The specific issue of this invention is using the thick card board material as the outer surface layer which can strengthen the stiffness of the hollow material, the use of thick card board can be equivalent to a several times the thickness of the existing thin paper; which does not need any additional strengthening material such as nylon mesh, reinforce paper tape nor strengthened fabric. The structure can still reach the required loading force. Meanwhile, the outer surface layer uses the high quality coated card board, which is the ideal material for printing, it gives a better printing effect than the existing box thin paper or coated grey board material.

3) The specific issue of this invention is the thick coated card board material as the outer surface layer, it can provide a good condition to further process if necessary, it is because there is no glue on the entire card board surface, and thus can provide an environment for special surface treatment, such as: embossing, pressing and cutting, gilding, surface coating, lamination, pasting with the external accessories and design with storage pocket and etc.

4) The specific issue of this invention is the outer surface layer of the material can be folded inward at the edge of the hollow material, with suitable glue such as white glue, animal glue, hot melt adhesive to strengthen the overall structure, which is similar to the building construction process, the concrete attached on the inner structure can protect and reinforce the functionality of the building, it plays a protective and strengthen role. If it is compared with the existing market color paper packaging, it simplifies the production work flow and reduces the labor force.

5) The specific issue of this invention can be delivered and stored in flat sheet as semi-finished product format, it can reduce the warehouse volume, reduce shipping volume and freight cost, whenever the product is needed, the user can fold it up to be the finished product.

3. The spacing structure in between the outer surface layer and inner structure is also the characteristics of this invention, the gap in between can set up additional equipments required to make the packaging device become more diversity.

1) The specific issue of this invention is the gap between the outer surface layer and inner structure can set up equipments, these additional accessories and packaging materials together constitute part of the structure of the box. The accessories can be mechanical accessories, electronic products, built-in bags, sponges and mechanical opening and other devices. The space in between outer surface layer and inner structure, which is the air layer, provides thermal insulation function. In addition, the basic structure of the hollow material is also an empty space structure, it helps to enhance the insulation effect.

2) The specific space of this invention is the hollow interval of the packaging device can be used for placing water bladder, the packaging device and water bladder can be suitable for microwave heated, the hot water in bladder can keep the food warm during transportation, such as: packaging device for pack lunch boxes, which can equip a water bladder in the hollow interval.

3) The specific issue of this invention is the hollow interval of the packaging device can be used for placing ice pack, it can be used for travelling purposes to keep frozen foods such as ice cream, iced cake, iced moon cake and etc.

4) The specific issue of this invention is the inner structure and the outer surface layer of the packaging device can be made into conical set with each other for packing ice cream cones to keep in frozen, which helps to extend the travelling and eating time.

5) The specific issue of this invention is the inner structure and the outer surface layer of the packaging device can be made into a cylindrical sleeve with each other, it can be used to carry hot or cold beverage cups, the outer surface layer can provide a wide range high-quality printing for advertising.

The packaging made by the above-mentioned packaging material can be used for: booklet slipcase box sets, boxes with lid, boxes with cover, boxes with window, profile wrappers, binder envelopes, hardcover book covers, photo frames, board game, insulation boxes, ice cream boxes, insulation mats, ice cream cones, and insulation cup sets. Based on the needs to fold up the hollow material of inner structure, and use the outer surface layer material to cover the hollow material of inner structure, the finished product can achieve the environmental effects of light weight and fewer chemicals.

Below are the practical examples 1-8 to show the implementation of this invented packaging material.

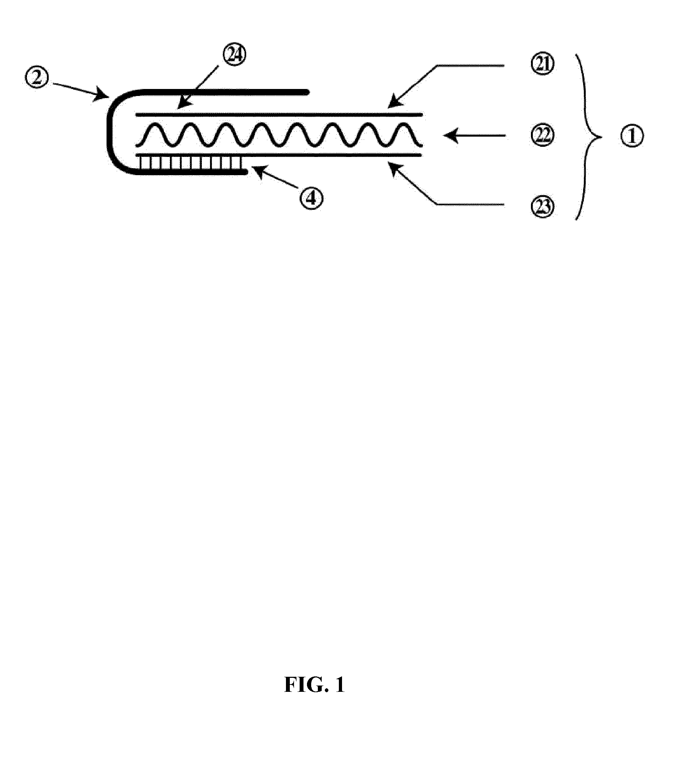

Examples 1-8 and FIGS. 1-8 are used to describe the method of producing the packaging material and the device of this invention. The design of the packaging device is based on the requirement of the outer surface layer material to design the required special surface treatment and the additional accessory, by the process of wrapped, tied, twisted onto the hollow inner structural layer to form the product.. Refer to the packaging device in FIGS. 1-8, by folding up the hollow material 1 as the inner structure, the outer surface layer material 2 to wrap, tie or twisted onto the hollow material to complete product with the inner structure. According to FIG. 1, the outer surface layer of the material 2 can be carried out embossing, scoring and cutting, gilding, surface coating, lamination, paste the external accessories and pockets to form the outer surface layer of the processing layer 3. Simply put a small amount of glue on hollow material 1 and outer surface layer material 2 to reinforce its structure, such as the corner, folding edge, inner structure and special additional design for decorative purposes on finished goods, according to the design to calculate the amount of glue required to form the adhesive structure 4.

Among them, FIG. 1 shows the 1 st example of packaging, which uses the hollow material as the basis inner structure of the packaging device. The inner structure uses outer face 21 and inner face 23 to clamp the middle structural layer 22 by applying glue on the two outer surfaces to become the raw materials of the hollow packing device for diversified future processing. The hollow structure 24 gives thermal insulation function and it can be installed a variety of accessories.

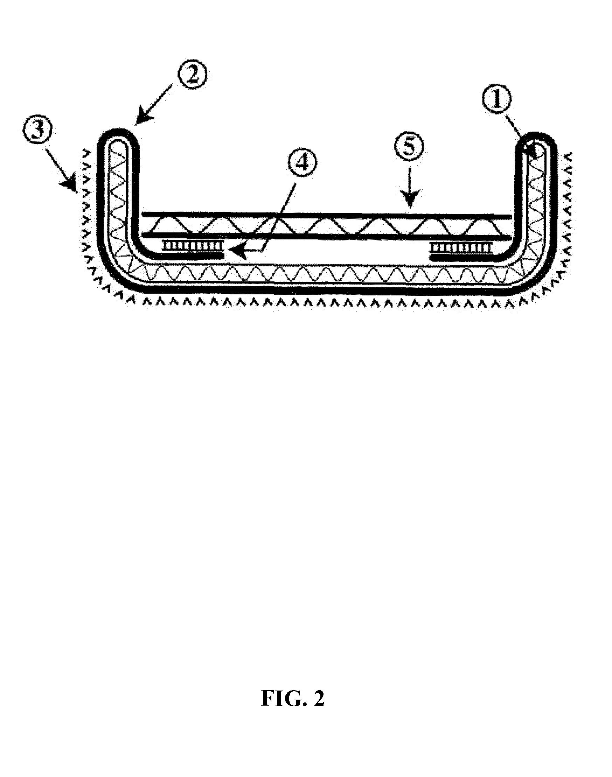

Among them, FIG. 2 shows the 2nd example of packaging which is a packaging box, the packaging device has an opening, and its surface has been laminated to form the processed layer 3, its has been equipped a hollow material 5 to increase the loading capacity, if it has to strengthen the bending and bursting rate to meet the freight requirements, it can stack up multi layers of hollow material to strengthen the results.

Its processing proposal:

1) inner structure: Based on the product size to design the die cut mold for producing semi finished product.

2) outer surface layer: Based on the product size to design the die cut mold to prepare for die cut process, the material can be divided into traditional high quality coated card board to proceed printing and surface treatment or decorative non printing material for producing semi finished product.

3) Hollow material with increasing the loading: Based on the product size to design the die cut mold for die cut the appropriate size.

4) Completion of process: both outer surface layer and inner structure can proceed of folding, the outer surface layer shall be wrapped, tied, twisted onto the inner structure. The hollow material with increasing the loading capacity by applying appropriate amount of glue to finish up the process.

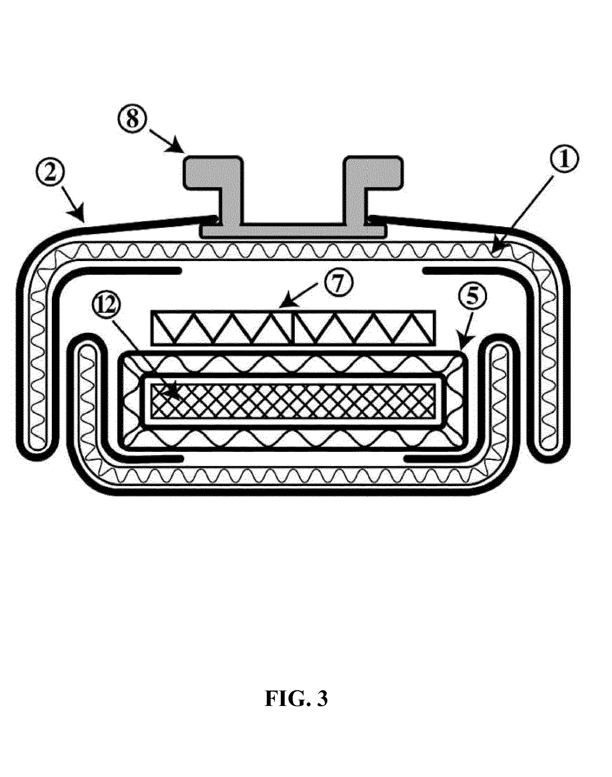

FIG. 3 shows the 3rd example of packaging which is a packaging box, it comprises the bottom tray and the lid, bottom tray has been equipped a hollow material 5 to increase the loading capacity, also has the additional hollow interval to place additional accessories- insulation bladder, ice pack 12. The lid has formed with space in between the outer surface layer and inner structure, the said interval has equipped the additional accessory - handle 8. Mechanical feature can be added at the interval between the outer surface layer and inner structure which makes the box with special functionality.

Its processing proposal:

Bottom Tray:

1) inner structure: Based on the product size to design the die cut mold for producing semi finished product.

2) outer surface layer: Based on the product size to design the die cut mold to prepare for die cut process, the material can be divided into traditional high quality card board, to proceed printing and surface treatment or decorative non printing material to conduct scoring and cutting to be the semi finished product.

3) To increasing the hollow material freight loading capacity: Based on the production requirement to make the die cut mold for die cut the appropriate size.

4) Completion of process: the outer surface layer and inner structure can proceed of folding, the outer surface layer shall be wrapped, tied, twisted onto the inner structure. The hollow material with increasing the loading capacity by adding additional hollow interval for additional parts to finish up the process.

The lid:

1) inner structure: Based on the product size to design the die cut mold for producing semi finished product.

2) outer surface layer: Based on the product size to design the die cut mold to prepare for die cut process, the material can be divided into traditional high quality card board to proceed printing and surface treatment or decorative non printing material to conduct scoring and cutting to be the semi finished product.

3) Completion the process: the outer surface layer and inner structure can proceed of folding, the window of the outer surface layer can install an additional part (mechanical part), then wrap, tie, twist onto the inner structure to complete the final product.

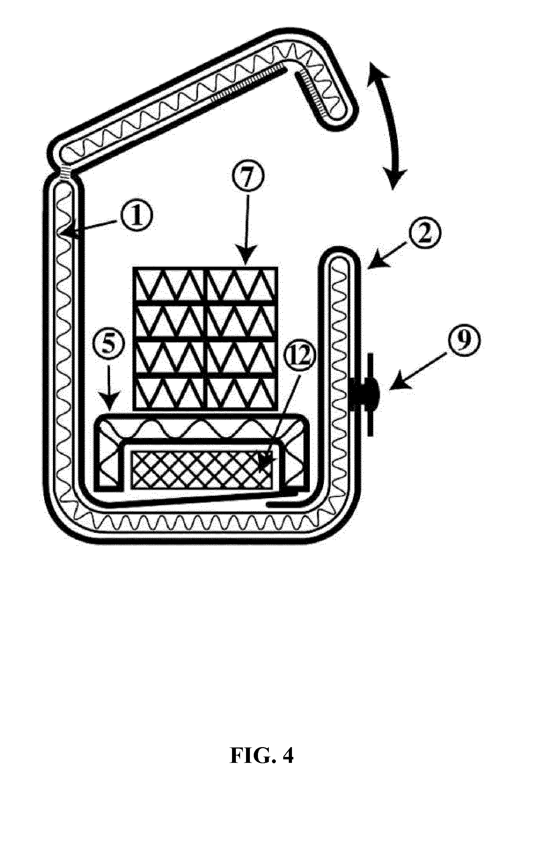

FIG. 4 shows the 4th example of packaging which is a packaging box, it comprises the one piece box with integrated lid. The lid is formed by folding the extended part of the main box. The lateral side of the bottom box has an additional part 9 - Button device, which is for fixing the lid. The box has been equipped a hollow material 5 to increase the loading capacity, also the additional hollow interval can place additional accessories- insulation bladder, ice pack 12.

Processing proposal:

The Lid:

1) inner structure: Based on the product size to design the die cut mold for producing semi finished product. Then combine with "outer structural layer" to complete the product.

Bottom tray

1) inner structure: Based on the product size to design the die cut mold for producing semi finished product.

2) outer surface layer: Based on the product size to design the die cut mold, comprising the window area, to prepare for die cut process, the material can be divided into traditional high quality card board to proceed printing and surface treatment or decorative non printing material to conduct scoring and cutting to be the semi finished product.

3) Hollow material with increasing of freight capacity: Based on the product size to design the die cut mold for die cut the needed size.

4) Completion the process: the outer surface layer and inner structure can proceed of folding, the window opening of the outer surface layer can be fixed with an additional part (button device), then wrap, tie up, twist onto the inner structure. Add an appropriate amount of glue to the required position for strengthening to complete the final product. The box has been equipped a hollow material to increase the loading capacity, also the additional hollow interval can place additional accessories.

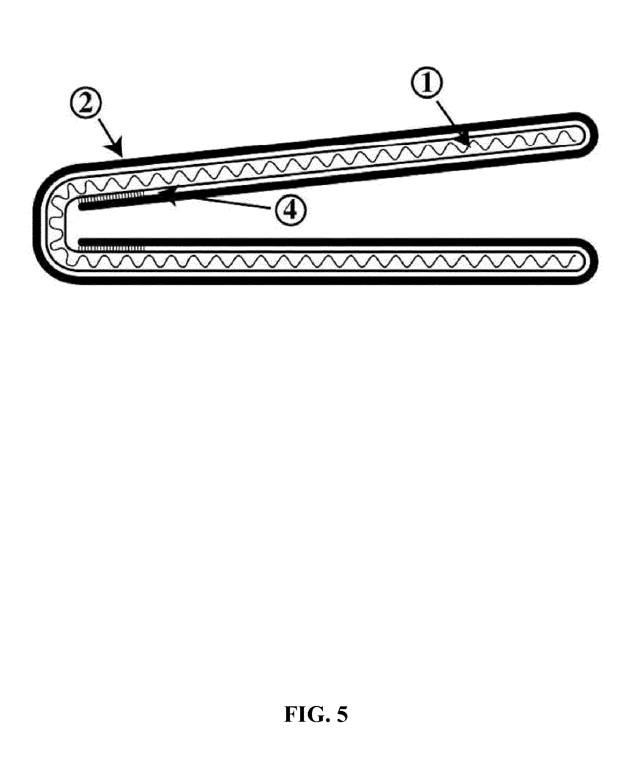

FIG. 5 shows the 5th example of packaging which is an photo album, the outer surface layer material wraps up the hollow material inner structure, then apply a small amount of glue at the edge to form the glue structure 4 for strengthening the outer surface layer and inner structure, its inner structure forms the grip space, one of the edge has an opening for inserting the books or photos.

Jacket

1) inner structure: Based on the product size to design the die cut mold for producing semi finished product.

2) outer surface layer: Based on the product size to design the die cut mold for the die cut process, the material can be divided into traditional high quality card board to proceed printing and surface treatment or decorative non printing material for producing semi finished product.

3) Completion the process: the outer surface layer and inner structure can proceed of folding, the outer surface layer is wrapped, tied up, twisted onto the inner structure. Add an appropriate amount of glue to the required position for strengthening to complete the final product.

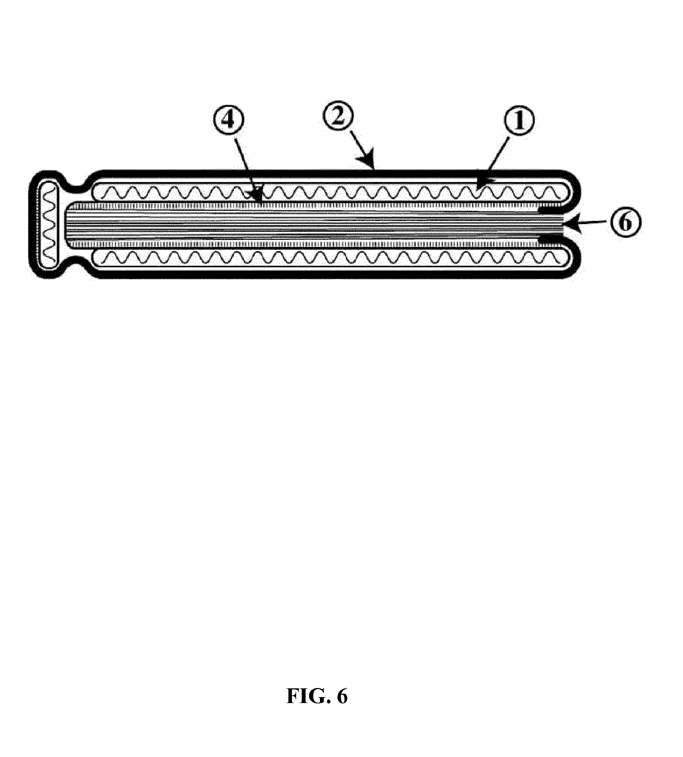

FIG. 6 shows the 6th example of packaging which is the hardcover booklet cover, its outer surface layer material is wrapped around the hollow material as the inner structure, then apply a small amount of glue at the edge to form the glue structure 4 for strengthening the outer surface layer and inner structure, its inner structure forms the gap space, and one edge as the opening for placing the book 6 to the space for making the hardcover books.

Hardcover Book Jacket:

1) inner structure: Based on the product size to design the die cut mold for producing semi finished product.

2) outer surface layer: Based on the product size to design the die cut mold for the die cut process, the material can be divided into traditional high quality card board to proceed printing and surface treatment or decorative non printing material for producing semi finished product.

3) Completion the process: the outer surface layer and inner structure can proceed of folding, the outer surface layer is wrapped, tied up, twisted onto the inner structure. Add an appropriate amount of glue to required position for strengthening to complete the jacket.

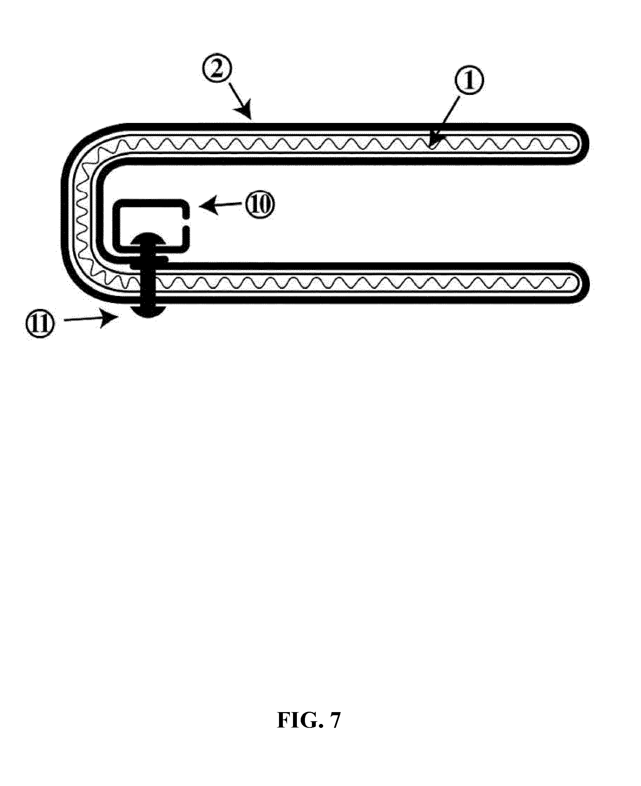

FIG. 7 shows the 7th example of packaging which is the binder, its outer surface layer material wraps up the hollow material as the inner structure, following to connect the machinery parts 10 and rivet 11.

Binder:

1) inner structure: Based on the product size to design the die cut mold for producing semi finished product.

2) outer surface layer: Based on the product size to design the die cut mold for the die cut process, the material can be divided into traditional high quality card board to proceed printing and surface treatment or decorative non printing material for producing semi finished product.

3) Completion the process: the outer surface layer and inner structure can proceed of folding, the outer surface layer is wrapped, tied up, twisted onto the inner structure. In a suitable location, use additional parts (rivets) to fix the additional accessories (mechanical parts) to complete the finished product.

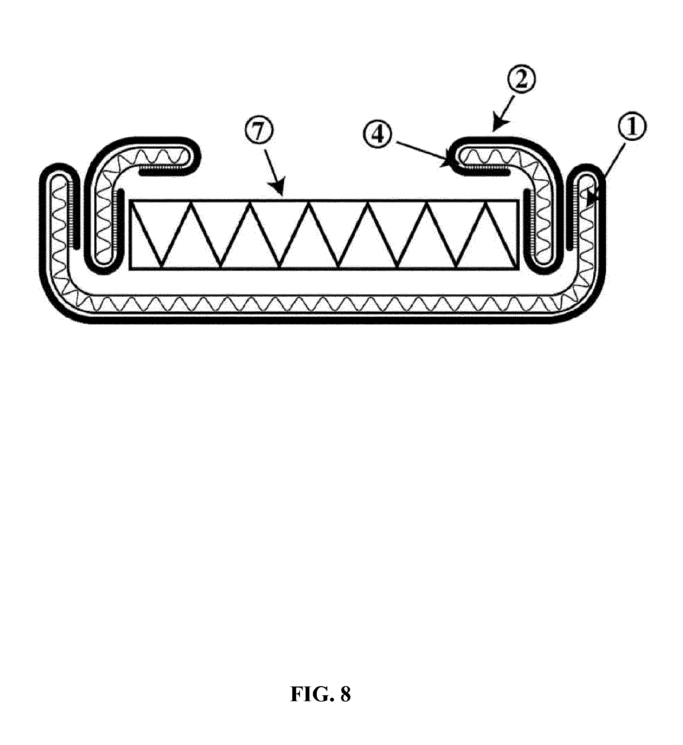

FIG. 8 shows the 8th example of packaging which is the photo frame, it comprises the bottom tray as the frame and top lid, the above mentioned bottom tray has an opening, such bottom tray is used to place the photo and it is revealed through the opening.

Processing proposal:

Bottom of frame

1) inner structure: Based on the product size to design the die cut mold for producing semi finished product.

2) outer surface layer: Based on the product size to design the die cut mold for the die cut process, the material can be divided into traditional high quality card board to proceed printing and surface treatment or decorative non printing material for producing semi finished product.

3) Completion the process: the outer surface layer and inner structure can proceed of folding, the outer surface layer is wrapped, tied up, twisted onto the inner structure. Add an appropriate amount of glue to required position for strengthening to complete the final product.

Top lid:

1) inner structure: Based on the product size to design the die cut mold for die cutting comprising the window opening for producing semi finished product.

2) outer surface layer: Based on the product size to design the die cut mold for die cutting comprising the window opening, the material can be divided into traditional high quality card board to proceed printing and surface treatment or decorative non printing material for producing semi finished product.

3) Completion the process: the outer surface layer and inner structure can proceed of folding, the outer surface layer has a window opening for placing the accessories like photo, then wrap, tie up, twisted onto the inner structure. Add an appropriate amount of glue to required position for strengthening to complete the final product.

As per the above-mentioned examples 2-8, the packaging material of this invention can be made into a variety of packaging device.

In summary, the beneficial effects on this invented packaging materials and the packaging device:

1. The inner structure of this invention make use of the environmental friendly hollow material which is produced from this invention, to play its environmental regeneration advantages, as well as inexpensive, low manufacturing cost and high efficiency characteristic to replace the traditional heavy and expensive solid board

2. The packaging material of this invention has an unique design, the inner structure is produced by hollow material and made by simple folding method, outer surface layer uses diversity materials, and cover onto the outer surface of inner structure to form the packaging device, not necessary to apply any glue on the entire surface, reduce the labor cost, saving on production costs, reduction of using of glue chemicals and materials, the light weight environmental hollow material of the inner structure can reduce the corresponding freight loading and achieve the effect of reducing carbon emission.

3. The hollow structure between the outer surface layer and inner structure is also the characteristics of this invention, the gap in between can set up additional equipments required to make the packaging device become more diversity.

## Claims

1. A packaging material, comprising:
a) an inner structural material; and
b) an outer surface material;
wherein
the inner structural material is a hollow material; and
the outer surface material is attached onto an outer surface of the inner structural material.

2. The packaging material of claim 1, **characterized in that**
the outer surface material is card board or non-printing decorated material;
the inner structural material comprises: a middle structural material, an outer face material and an inner face material which are arranged onto both sides of the middle structural material; and
the middle structural material comprises a cavity or channel, and is glued with the outer face and inner face material.

3. The packaging material of claim 1, **characterized in that** a hollow space is formed between the inner structural material and the outer surface material.

4. The packaging material of claim 1, comprising multi layers of stacked inner structural material, and the hollow material of the inner structural material is designed in accordance with mechanical engineering.

5. A method for producing a packaging material of claim 1, 2,3, or 4, comprising:
a) producing a middle structural material comprises a cavity or channel, and sandwiching the middle structural material with an outer face material and an inner face material to yield a semi hollow material; and
b) attaching the outer surface material onto an outer surface of the hollow material.

6. The method of claim 5, **characterized in that** the middle structural material comprises the cavity or channel is prepared as follows:
cutting a kraft paper or load bearing material into strips having a preset length in a rolling mode;
applying glue to the strips at a fixed length at a given spacing position;
stacking and sticking the strips to form the middle structural material having a strip shape;
stretching the middle structural material to form a plurality of three dimensional hollow structures;
applying glue on both sides of the middle structural material; and
sandwiching the middle structural material with the outer face material and the inner face material;
the middle structural material comprising the cavity or channel being prepared as follows:
pressing a kraft paper or load bearing material into long pit having wave channels in a rolling mode using two rollers;
applying glue on vertex points at upper and lower ends of the long pit having wave channels; and
sandwiching the middle structural material with the outer face material and the inner face material.

7. A packaging device, being prepared by a packaging material of any of claims 1-4, and comprising an inner structure formed by folding up the inner structural material, and an outer surface layer formed at the outer surface of the inner structure.

8. The packaging device of claim 6, being packaging boxes, booklet slip case, box with window, binder envelope, hardcover book case, photo frame, thermal insulation boxes, ice cream cone, or thermal insulation cup sleeve.

9. The packaging device of claim 7 or 8, wherein
a glue construction is arranged on a contact area between the inner structure and the outer surface layer;
the inner structural material comprises: a middle structural material, an outer face material and an inner face material which are arranged onto both sides of the middle structural material;
the outer surface layer of the packaging device comprises a processing layer having a hollow material for increasing loading capability;
a gap is formed between the inner structural layer and the outer surface layer; and
the gap is installed with mechanical parts, electronic parts, or insulation material.

10. The packaging device of claim 7 or 8, wherein the inner structure and the outer surface layer are cylindrical or cone in shape, and sleeved with each other to form an integrated structure.
